# EUROPEAN PATENT APPLICATION

(11) **EP 4 276 150 A1**
(43) Date of publication of application: **15.11.2023**
(21) Application number: 21917748.2
(22) Date of filing: 27.12.2021
(51) Int. Cl.: C08L 65/00, C08L 79/00, H01B 1/12, H01B 1/20

(54) **ELECTRIC CONDUCTIVE POLYMER COMPOSITION**

(30) Priority: 08.01.2021 JP 2021002132
(71) Applicant: Idemitsu Kosan Co., Ltd, Tokyo 100-8321 (JP)
(72) Inventor: ONODERA, Shingo, Sodegaura-shi, Chiba 299-0293 (JP); BANDO, Toru, Sodegaura-shi, Chiba 299-0293 (JP)
(74) Representative: Gille Hrabal Partnerschaftsgesellschaft mbB Patentanwälte
(86) International application number: PCT/JP2021/048586
(87) International publication number: WO 2022/149528

(57) **Abstract**

A conductive polymer composition comprising (a) conductive polymer and (b) a solvent, wherein the component (b) comprises a tertiary alcohol, and the content ratio of the tertiary alcohol in the entire component (b) is more than 1% by mass and 70% by mass or less.

## Description

### Technical Field

The present invention relates to a conductive polymer composition.

### Background Art

Conductive polymer is used as a solid electrolyte of a capacitor, an electromagnetic wave absorbing coating agent, an antistatic coating agent, an electrolytic plating undercoat material, and conductive ink for a circuit wiring application and the like.

In addition to its electrical properties, polyaniline which is a kind of conductive polymer has an advantage that it can be relatively easily synthesized from inexpensive aniline and exhibits excellent stability against oxygen and the like in a state of exhibiting conductivity. For example, highly conductive polyaniline can be easily obtained by the method described in Patent Document 1.

Conductive polymer is generally insoluble in a solvent and difficult to mold. In recent years, conductive polymers of a water-dispersible type or an organic solvent-soluble type have been developed, and as moldability and processability have been increased, a conductive polymer film is formed by coating, printing, or the like, and various functionalities are imparted to the conductive polymer film.

### Related Art Document

### Patent Document

[Patent Document 1] WO 2012/102017 A1

### Summary of the Invention

However, in the conventional conductive polymer composition containing conductive polymer, there is a problem that the solubility of the conductive polymer is not sufficient.

An object of the present invention is to provide a conductive polymer composition excellent in soluble of conductive polymer.

According to the present invention, the following conductive polymer composition is provided.
1. A conductive polymer composition comprising (a) conductive polymer and (b) a solvent, wherein the component (b) comprises a tertiary alcohol, and the content ratio of the tertiary alcohol in the entire component (b) is more than 1% by mass and 70% by mass or less.
2. The conductive polymer composition according to 1, wherein the component (b) comprises a water-immiscible organic solvent.
3. The conductive polymer composition according to 2, wherein the ratio of the content of the water-immiscible organic solvent and the tertiary alcohol is 98 to 20: 2 to 80 by mass ratio.
4. The conductive polymer composition according to any one of 1 to 3, wherein the ratio of the content of the component (a) to the content of the component (b) (the content of the component (a)/the content of the component (b)) is 0.0001 to 0.5 by mass ratio.
5. The conductive polymer composition according to any one of 1 to 4, wherein the content of the component (a) is 0.01 to 30% by mass.
6. The conductive polymer composition according to any one of 1 to 5, wherein the tertiary alcohol is at least one selected from the group consisting of tert-amyl alcohol, 2-methyl-2-propanol, 3-methyl-3-pentanol, 2-methyl-2-pentanol, 2-methyl-2-hexanol, 2-methyl-2-heptanol, 3-methyl-3-octanol, diacetone alcohol, terpineol, and benzylic acid.
7. The conductive polymer composition according to any one of 2 to 6, wherein the water-immiscible organic solvent is at least one of an aromatic solvent and an aliphatic hydrocarbon solvent.
8. The conductive polymer composition according to 7, wherein the aromatic solvent is at least one selected from the group consisting of toluene, xylene, anisole, cumene, and benzyl alcohol.
9. The conductive polymer composition according to 7, wherein the aliphatic hydrocarbon solvent is at least one selected from the group consisting of hexane, octane, isononane, isooctane, cyclohexane, methylcyclohexane, and methylcyclopentane.
10. The conductive polymer composition according to any one of 1 to 9, wherein the total content of a primary alcohol and a secondary alcohol is 0.1% by mass or less.
11. The conductive polymer composition according to any one of 1 to 10, wherein the component (a) comprises one or more selected from the group consisting of polyaniline, a polyaniline derivative, polythiophene, a polythiophene derivative, polypyrrole, and a polypyrrole derivative.
12. The conductive polymer composition according to any one of 1 to 11, wherein the component (a) is a polyaniline complex comprising polyaniline and a proton donor, and the polyaniline is doped with the proton donor.
13. The conductive polymer composition according to 12, wherein the proton donor is a sulfonic acid or a sulfonate.
14. The conductive polymer composition according to 13, wherein the sulfonic acid or sulfonate is a sulfosuccinic acid derivative represented by the following formula (III):

   M(O₃SCH(CH₂COOR¹²)COOR¹³)ₘ ··· (III)
wherein in the formula (III), M is a hydrogen atom, an organic free radical, or an inorganic free radical; m is the valence of M; R¹² and R¹³ are independently a hydrocarbon group or a group represented by -(R¹⁴O)ᵣ-R¹⁵, wherein R¹⁴ is a hydrocarbon group or a silylene group, R¹⁵ is a hydrogen atom, a hydrocarbon group, or a group represented by R¹⁶₃Si-, wherein R¹⁶ is a hydrocarbon group, wherein the three R¹⁶'s may be the same as or different from each other, and r is an integer of 1 or more. 15. A conductive molded body obtained by forming the conductive polymer composition according to any one of 1 to 14.

According to the present invention, a conductive polymer composition excellent in soluble of conductive polymer can be provided.

### Brief Description of the Drawings

Figure 1 shows the top surface of a glass substrate with indium-tin-oxide electrode (ITO electrode) formed on the surface.
Figure 2 shows the top surface of a glass substrate with a conductive polyaniline thin film shaved to expose ITO electrode terminals to the surface.

### Mode for Carrying out the Invention

In this specification, "x to y" represents a numerical range of "x or more and y or less."

### [Conductive polymer composition]

The conductive polymer composition according to one aspect of the present invention contains the following component (a) and component (b):
(a) conductive polymer
(b) a solvent.

The component (b) contains a tertiary alcohol, and the content ratio of the tertiary alcohol in the entire component (b) is more than 1% by mass and 70% by mass or less.

When the conductive polymer composition of the present aspect (hereinafter, sometimes simply referred to as "composition") contains a tertiary alcohol in the component (b) at the content ratio within the above predetermined range, the solubility of the conductive polymer (component (a)) in the solvent (component (b)) is increased.

Therefore, the composition of the present aspect is easy to obtain the desired conductive polymer concentration, and is excellent in handleability because precipitation and residual powder are hardly generated.

This is presumed to be due to the fact that the polarity of the entire solvent can be controlled by containing the tertiary alcohol in the predetermined ratio with respect to the total amount of the component (b), and thereby the solubility of the conductive polymer in the component (b) is enhanced.

In addition, a tertiary alcohol is more resistant to oxidation than, for example, a primary alcohol and a secondary alcohol, and thus can exist stably in the composition. Therefore, since the above-described effect of increasing the solubility of the conductive polymer can be stably obtained, the formation of precipitation and the modification of the composition can be suppressed, and excellent storage stability can be obtained.

In other words, when a primary alcohol or a secondary alcohol is used in place of the tertiary alcohol, the solubility of the conductive polymer may decrease and the formation of precipitation and the modification of the composition may cause, due to oxidation and modification of the primary alcohol or the secondary alcohol in the composition.

Further, since a tertiary alcohol has a lower boiling point than, for example, a primary alcohol or a secondary alcohol having the same number of carbon atoms, a coating film of the composition can be dried at a lower temperature. Therefore, deteriorate of the conductive polymer contained in the coating film due to heat can be suppressed, and a film having excellent conductivity can be obtained. In addition, the residual amount of the tertiary alcohol in the film can be reduced, and a film having excellent conductivity can be obtained.

In addition, when a tertiary alcohol is used, compared with a case where a primary alcohol or a secondary alcohol having the same number of carbon atoms is used, the composition having a higher polyaniline complex content can be obtained when the compositions having the same viscosity are compared with each other, so that the content of the alcohol in the composition is lower. Thus, even when heating conditions of the coating film of the composition are the same, the amount of residual solvent in the film can be reduced, and a film having excellent conductivity can be obtained.

In addition, tertiary alcohols have lower hydroxyl dissociation constants than, for example, primary alcohol and secondary alcohol with the same number of carbon atoms. Therefore, since the tertiary alcohol has a small interaction with the conductive polymer, the possibility of causing deterioration of the conductive polymer is small, and the storage stability of the conductive polymer composition can be maintained for a long time, and the conductivity of the conductive polymer film obtained from the composition can be maintained. In addition, the reaction with the water-prohibiting material or a catalytic impurity can be suppressed, and applying and coating to such a substance are also possible.

In addition, since the component (b) contains a tertiary alcohol, as described above, the solubility of the conductive polymer (component (a)) in the solvent (component (b)) is enhanced, so that the viscosity of the conductive polymer composition can be easily adjusted within a range in which a desired conductive polymer concentration can be obtained by adjusting the addition amount of the tertiary alcohol and the addition amount of the conductive polymer.

Therefore, the composition of the present aspect is easy to obtain the conductive polymer composition having a desired viscosity when component (b) contains a tertiary alcohol.

### (Component (a): conductive polymer)

Examples of the conductive polymer include polyaniline, polythiophene, polypyrrole, and derivatives thereof. These may or may not have a substituent. These may be used alone or in a combination of two or more.

As the conductive polymer, polyaniline is preferable.

The polyaniline has a weight-average molecular weight preferably of 10,000 or more, more preferably of 20,000 or more, still more preferably of 30,000 or more and 1,000,000 or less, still more preferably of 40,000 or more and 1,000,000 or less, and particularly preferably of 52,000 or more and 1,000,000 or less.

The weight average molecular weight of the polyaniline is measured as follows.

0.25 g of a polyaniline complex is dissolved in a mixed solvent of 5 g of toluene and 0.025 g of isopropyl alcohol to prepare a polyaniline complex solution. 20 mL of NMP containing 0.01 M LiBr is collected and 28 µL of triethylamine is added using a microsyringe. To this solution, 0.10 mL of the prepared polyaniline complex solution is added dropwise, and the filtration was performed using a Chromatodisc (hydrophilic/hydrophobic, 0.45 µ) manufactured by GL Sciences Inc. to obtain a solution for measuring GPC.

GPC is measured using GPC column ("ShodexKF-806M" manufactured by Showa Denko K.K., 2 columns) under the following conditions.
Solvent: NMP containing 0.01M LiBr
Flow rate: 0.70 mL/min
Column temperature: 60 °C
Injection volume: 100 µL
UV detection wavelength: 270 nm

The weight-average molecular weight obtained by the above-described method is polystyrene (PS) equivalent weight average molecular weight.

The polyaniline may or may not have a substituent, and is preferably an unsubstituted polyaniline from the viewpoint of versatility and economic efficiency.

Examples of the substituent in the case when the polyaniline has a substituent include a linear or branched hydrocarbon group such as a methyl group, an ethyl group, a hexyl group, and an octyl group; an alkoxy group such as a methoxy group and an ethoxy group; an aryloxy group such as a phenoxy group; and a halogenated hydrocarbon group such as a trifluoromethyl group (-CF₃ group).

The polyaniline is preferably a polyaniline complex in which a proton donor is doped with polyaniline.

The doping of the proton donor into the polyaniline can be confirmed by ultraviolet/visible/near-infrared spectroscopy or X-ray photoelectron spectroscopy, and the proton donor can be used without any particular chemical structural limitation as long as the proton donor has enough acidity to generate carriers in the polyaniline.

It is preferable to use the polyaniline complex because the solubility in a solvent is increased.

Examples of the proton donor include, for example, a Bronsted acid or a salt thereof, and the proton donor is preferably an organic acid or a salt thereof (e.g., a sulfonic acid or a sulfate salt), and more preferably a proton donor represented by the following formula (I).

M(XARₙ)ₘ (I)

In the formula (I), M is a hydrogen atom, an organic free radical, or an inorganic free radical.

Examples of the organic free radical include, for example, a pyridinium group, an imidazolium group, an anilinium group, and the like. Examples of the inorganic free radical include, for example, sodium, lithium, potassium, cesium, ammonium, and the like.

X is an acidic group, and examples thereof include a group represented by -SO₃⁻, -PO₃²⁻, - PO₄(OH)⁻, -OPO₃²⁻, -OPO₂(OH)⁻, -COO-, and the like, and a group represented by -SO₃⁻ is preferable.

A is a hydrocarbon group which may have a substituent.

Examples of the hydrocarbon group include corresponding (n+1)-valent groups of, for example, a linear or branched alkyl group including 1 to 24 carbon atoms; an alkenyl group; a cycloalkyl group which may have a substituent such as a cyclopentyl group, a cyclohexyl group, a cycloheptyl group, a cyclooctyl group, or a menthyl group; a dicycloalkyl group or polycycloalkyl group which may be fused such as a bicyclohexyl group, a norbornyl group, or an adamantyl group; an aryl group with aromatic group which may have a substituent such as a phenyl group, a tosyl group, a thiophenyl group, a pyrrolinyl group, a pyridinyl group, or a furanyl group; and an a diaryl group or polyaryl group which may be fused such as a naphthyl group, an anthracenyl group, a fluorenyl group, a 1 ,2,3,4-tetrahydronaphthyl group, an indanyl group, a quinolinyl group, or an indonyl group; an alkylaryl group, and the like.

R's are independently substituent represented by -R¹, -OR¹, -COR¹, -COOR¹, -CO(COR¹), or - CO(COOR¹).

R¹ is a hydrocarbon group which may have a substituent including 4 or more carbon atoms, a silyl group, an alkylsilyl group, a group represented by -(R²O)ₓ-R³, or a group represented by -(OSiR³₂)ₓ-OR³(R² is an alkylene group, R³'s are hydrocarbon groups which may be the same as or different from each other, x is an integer of 1 or more).

Examples of the hydrocarbon group for R¹ include a linear or branched butyl group, pentyl group, hexyl group, heptyl group, octyl group, nonyl group, decyl group, dodecyl group, pentadesyl group, eicosanyl group, and the like.
n is an integer of 2 or more. m is the valence of M.

The organic proton acid represented by the formula (I) or a salt thereof is preferably alkylbenzenesulfonic acid, dialkylbenzenesulfonic acid, dialkylnaphthalenesulfonic acid, sulfophthalic acid ester, or an organic proton acid represented by the formula (II) or a salt thereof.

M(XCR⁴(CR⁵₂COOR⁶)COOR⁷)ₚ (II)

In the formula (II), M and X are the same as in the formula (I).
p is the valence of M.

R⁴ and R⁵ are independently a hydrogen atom, a hydrocarbon group, or a group represented by R⁸₃Si- (wherein R⁸ is a hydrocarbon group, and three R⁸'s may be the same as or different from each other).

Examples of the hydrocarbon group for R⁴ and R⁵ include a linear or branched alkyl group including 1 to 24 carbon atoms; an aryl group containing an aromatic ring; an alkylaryl group, and the like.

The hydrocarbon group for R⁸ is the same as the hydrocarbon group for R⁴ and R⁵.

R⁶ and R⁷ are independently a hydrocarbon group, or a group represented by -(R⁹O)_{q}-R¹⁰ [wherein R⁹ is a hydrocarbon group or a silylene group, R¹⁰ is a hydrogen atom, a hydrocarbon group, or a group represented by R¹¹₃Si-(R¹¹ is a hydrocarbon group, and three R¹¹'s may be the same as or different from each other), and q is an integer of 1 or more].

Examples of the hydrocarbon group for R⁶ and R⁷ include a linear or branched alkyl group including 1 to 24 carbon atoms, preferably including 4 or more carbon atoms; an aryl group containing an aromatic ring; an alkylaryl group, and the like.

Specific examples of the hydrocarbon group for R⁶ and R⁷ include a linear or branched butyl group, pentyl group, hexyl group, octyl group, decyl group, and the like.

Examples of the hydrocarbon group for R⁹ include a linear or branched alkylene group including 1 to 24 carbon group; an arylene group including an aromatic ring; an alkylarylene group; an arylalkylene group, and the like.

The hydrocarbon group for R¹⁰ and R¹¹ are the same as those for R⁴ and R⁵. q is preferably an integer of 1 to 10.

Specific examples of the organic proton acid represented by the formula (II) or a salt thereof when R⁶ and R⁷ are a group represented by -(R⁹O)ₙ-R¹⁰ include an acid represented by the following formula.

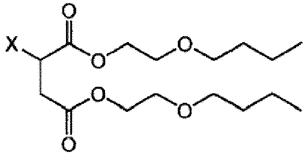

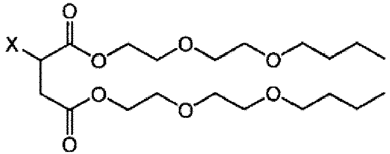

In the formula, X is a group represented by -SOs or the like.

The compound represented by the formula (II) (the organic proton acid or a salt thereof) is preferably a sulfosuccinic acid derivative represented by the following formula (III).

M(O₃SCH(CH₂COOR¹²)COOR¹³)ₘ (III)

In the formula (III), M and m are the same as those in the formula (I).

R¹² and R¹³ are independently a hydrocarbon group, or a group represented by -(R¹⁴O)ᵣ-R¹⁵ [wherein R¹⁴ is a hydrocarbon group or a silylene group, R¹⁵ is a hydrogen atom, a hydrocarbon group, or a group represented by R¹⁶₃Si- (wherein R¹⁶ is a hydrocarbon group, and three R¹⁶'s may be the same as or different from each other), and r is an integer of 1 or more].

The hydrocarbon group for R¹² and R¹³ are the same as the hydrocarbon group for R⁶ and R⁷.

The hydrocarbon group for R¹⁴ is the same as the hydrocarbon group for R⁹. The hydrocarbon group for R¹⁵ and R¹⁶ are the same as the hydrocarbon group for R⁴ and R⁵.
r is preferably an integer of 1 to 10.

Specific examples of the organic proton acid represented by the formula (III) or a salt thereof in the case where R¹² and R¹³ are groups represented by -(R¹⁴O)ᵣ-R¹⁵ are the same as the organic proton acid represented by the formula (II) or a salt thereof in the case where R⁶ and R⁷ are groups represented by -(R⁹O)ₙ-R¹⁰.

The hydrocarbon group for R¹² and R¹³ are the same as the hydrocarbon group for R⁶ and R⁷, and is preferably a butyl group, a hexyl group, a 2-ethylhexyl group, a decyl group, and the like.

As the compound represented by the formula (I), di-2-ethylhexyl sulfosuccinic acid, and sodium di-2-ethylhexyl sulfosuccinate are preferable. For example, sodium di-2-ethylhexyl sulfosuccinate may be di-2-ethylhexyl sulfosuccinate ion.

The doping ratio of the proton donor to polyaniline is preferably 0.30 to 0.65, more preferably 0.32 to 0.60, still more preferably 0.33 to 0.57, and particularly preferably 0.34 to 0.55. When the doping ratio is 0.30 or more, the solubility of the polyaniline complex in the organic solvent is sufficiently high.

The doping ratio is defined as (number of moles of the proton donor doped into polyaniline)/ (number of moles of monomer unit of polyaniline). For example, a polyaniline complex containing unsubstituted polyaniline and a proton donor having a doping ratio of 0.5 means that one proton donor is doped with two monomer unit molecules of polyaniline.

The doping ratio can be calculated if the number of moles of the proton donor and the monomer unit of the polyaniline in the polyaniline complex can be measured. For example, when the proton donor is an organic sulfonic acid, the number of moles of sulfur atoms derived from the proton donor and the number of moles of nitrogen atoms derived from the monomer unit of polyaniline are quantified by an organic elemental analysis method, and the doping ratio can be calculated from the ratio of these values.

The polyaniline complex preferably contains unsubstituted polyaniline and a sulfonic acid which is a proton donor, and satisfies the following formula (6).

0.32≦S₅/N₅≦0.60 (6)

In the formula (5), S₅ represents the total number of moles of sulfur atoms contained in the polyaniline complex, and N₅ represents the total number of moles of nitrogen atoms contained in the polyaniline complex. The number of moles of nitrogen atoms and sulfur atoms is a value measured by an organic element analysis method.

The content of the component (a) may be 0.01 to 50% by mass, 0.01 to 40% by mass, 0.01 to 30% by mass, 0.1 to 20% by mass, or 0.5 to 15% by mass, based on the total amount of the composition.

When the content of the component (a) is within the above range, a coating film with uniform thickness and concentration distribution in the film can easily be obtained.

### [Method for producing polyaniline complex]

The polyaniline complex can be produced by chemical oxidative polymerization of a substituted or unsubstituted aniline in a solution which has a two-liquid phase and contains a proton donor, phosphoric acid, and an emulsifier different from the proton donor. The polyaniline complex can also be produced by adding an oxidative polymerization agent to a two-liquid phase solution containing a substituted or unsubstituted aniline, a proton donor, phosphoric acid, and an emulsifier different from the proton donor.

The polyaniline molecule satisfying the formula (I) is obtained by chemical oxidative polymerization of a substituted or unsubstituted aniline in a two-liquid phase solution in which phosphoric acid and an emulsifier are present.

Here, the "two-liquid phase solution" means a state in which two liquid phases incompatible with each other are present in the solution. For example, it means a state in which "a phase of a high polarity solvent" and "a phase of a low polarity solvent" are present in the solution.

In addition, the "two-liquid phase solution" also includes a state in which one liquid phase is a continuous phase and the other liquid phase is a dispersed phase. Examples thereof include a state in which "a phase of a high polarity solvent" is a continuous phase and "a phase of a low polarity solvent" is a dispersed phase, and a state in which "a phase of a low polarity solvent" is a continuous phase and "a phase of a high polarity solvent" is a dispersed phase.

The high polarity solvent used in the production of the polyaniline complex is preferably water, and the low polarity solvent is preferably an aromatic hydrocarbon such as toluene or xylene.

The proton donor is preferably a compound represented by the formula (I), more preferably a compound represented by the formula (II), and still more preferably a compound represented by the formula (III).

As the emulsifier, both ionic emulsifiers, in which the hydrophilic moiety is ionic, and nonionic emulsifiers, in which the hydrophilic moiety is nonionic, may be used, and one emulsifier may be used alone or two or more emulsifiers may be used in combination.

Examples of the ionic emulsifier include a cationic emulsifier, an anionic emulsifier, and a zwitterionic emulsifier.

Specific examples of the anionic emulsifier include a fatty acid, a disproportionated rosin soap, a higher alcohol ester, polyoxyethylene alkyl ether phosphate, alkenyl succinate, sarcosinate, and salts thereof.

Specific examples of the cationic emulsifier include an alkyldimethylbenzylammonium salt and an alkyltrimethylammonium salt.

Specific examples of the zwitterionic emulsifier include an alkyl betaine type, an alkyl amide betaine type, an amino acid type, and an amine oxide type.

Specific examples of the nonionic emulsifier include polyoxyethylene alkyl ether, polypropylene glycol polyethylene glycol ether, polyoxyethylene glycerol borate fatty acid ester, and polyoxyethylene sorbitan fatty acid ester.

Among the emulsifiers, an anionic emulsifier and a nonionic emulsifier are preferred.

As the anionic emulsifier, an anionic emulsifier having a phosphate ester structure is more preferable. Further, as the nonionic emulsifier, a nonionic emulsifier having a polyoxyethylene sorbitan fatty acid ester structure is more preferable.

Examples of the oxidizing agent used for the chemical oxidation polymerization (hereinafter, sometimes referred to as an oxidation polymerizing agent) include sodium persulfate, potassium persulfate, ammonium persulfate, peroxides such as hydrogen peroxide; ammonium dichromate, ammonium perchlorate, potassium iron sulfate (III), iron trichloride (III), manganese dioxide, iodic acid, potassium permanganate, and iron paratoluenesulfonate, and persulfates such as ammonium persulfate are preferable.

These oxidizing agents may be used alone or in combination of two or more thereof.

The polymerization temperature is usually -5 to 60 °C, preferably -5 to 40 °C. The polymerization temperature may be changed during the polymerization reaction. When the polymerization temperature is within this range, side-reactions can be avoided.

### (Component (b): solvent)

The composition according to one aspect of the present invention contains a solvent, wherein the solvent contains a tertiary alcohol, as described above.

The content proportion of the tertiary alcohol in the entire component (b) is more than 1% by mass and 70% by mass or less.

When the content proportion of the tertiary alcohol in the entire component (b) is within the above range, the conductive polymer exhibits excellent solubility in the solvent (component (b)).

The content proportion of the tertiary alcohol in the entire component (b) may be more than 1% by mass and 70% by mass or less, may be more than 1% by mass and 60% by mass or less, may be 2% by mass or more and 50% by mass or less, may be 3% by mass or more and 45% by mass or less, may be 3% by mass or more and 40% by mass or less, and may be more than 1% by mass and 10% by mass or less.

As the tertiary alcohol, for example, a tertiary alcohol represented by the following formula (7) can be used.

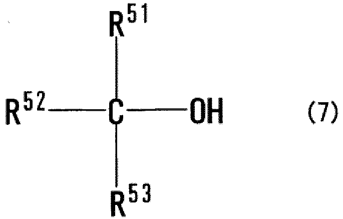

In the formula (7), R⁵¹ to R⁵³ are independently a substituted or unsubstituted alkyl group including 1 to 10 carbon atoms, a substituted or unsubstituted aryl group including 6 to 20 ring carbon atoms, or a carboxy group.

The above R⁵¹ to R⁵³ will be described below.

The alkyl group including 1 to 10 carbon atoms may be linear or branched, and examples thereof include a methyl group, an ethyl group, a propyl group, an isopropyl group, a butyl group, an isobutyl group, a tertiary butyl group, a pentyl group, a tertiary amyl group, a hexyl group, a 2-ethylhexyl group, a heptyl group, an octyl group, a nonyl group, a decyl group, and the like.

Examples of the aryl group including 6 to 20 ring carbon atoms include a phenyl group, a tolyl group, a xylyl group, a naphthyl group, and the like.

Some or all of the hydrogen atoms of the alkyl group including 1 to 10 carbon atoms and some or all of the hydrogen atoms of the aryl group including 6 to 20 ring carbon atoms may be substituted with an acyl group or a carboxy group.

Examples of the acyl group include an acyl group including 1 to 10 carbon atoms, such as a methanoyl group, an ethanoyl group (acetyl group), a benzoyl group, and the like.

That is, some or all of the hydrogen atoms of the alkyl group including 1 to 10 carbon atoms may be substituted with at least one selected from the group consisting of an acyl group including 1 to 10 carbon atoms and a carboxy group, and some or all of the hydrogen atoms of the aryl group including 6 to 20 ring carbon atoms may be substituted with at least one selected from the group consisting of an acyl group including 1 to 10 carbon atoms and a carboxy group.

Specific examples of the tertiary alcohol include tert-amyl alcohol, 2-methyl-2-propanol (tert-butanol), 3-methyl-3-pentanol, 2-methyl-2-pentanol, 2-methyl-2-hexanol, 2-methyl-2-heptanol, 3-methyl-3-octanol, diacetone alcohol, terpineol, benzylic acid, and the like.

These tertiary alcohols may be used alone or in combination of two or more thereof.

Among these, from the viewpoint of increasing the solubility of the conductive polymer, tert-amyl alcohol, 2-methyl-2-propanol, 2-methyl-2-pentanol, 3-methyl-3-pentanol, diacetone alcohol, terpineol, and the like are preferably used.

The content of the tertiary alcohol may be 3 parts by mass or more, 20 to 50000 parts by mass, 50 to 5000 parts by mass, 60 to 500 parts by mass, or 70 to 100 parts by mass based on 100 parts by mass of the component (a).

When the content of the tertiary alcohol based on 100 parts by mass of the component (a) is within the above range, the conductive polymer exhibits excellent solubility in the solvent (component (b)).

The solvent other than the tertiary alcohol is not particularly limited as long as the component (a) is dissolved, and is preferable an organic solvent. The organic solvent may be a water-soluble organic solvent or may be an organic solvent that is substantially immiscible with water (a water-immiscible organic solvent).

The water-soluble organic solvent may be a protic polar solvent or an aprotic polar solvent, and examples thereof include ketones such as acetone; ethers such as tetrahydrofuran, dioxane, diethyl ether, and ethylene glycol mono-tert-butyl ether; aprotic polar solvents such as N-methyl pyrrolidone, and the like.

These water-soluble organic solvents may be used alone or in combination of two or more thereof.

Examples of the water-immiscible organic solvent include aromatic solvents such as benzene, toluene, xylene, ethylbenzene, anisole, cumene, benzyl alcohol, and tetralin;
aliphatic hydrocarbon solvents such as hexane, octane, decane, isononane, isooctane, cyclohexane, methylcyclohexane, methylcyclopentane, methoxycyclopentane, and cycloheptane;
halogen-containing solvents such as methylene chloride, chloroform, carbon tetrachloride, dichloroethane, and tetrachloroethane;
ester solvents such as ethyl acetate, isobutyl acetate, n-butyl acetate, and butyl butyrate;
ketone solvents such as methyl isobutyl ketone (MIBK), methyl ethyl ketone, cyclopentanone, and cyclohexanone;
ether solvents such as cyclopentyl methyl ether, propylene glycol dimethyl ether, and the like.

In addition, an isoparaffin solvent containing one or two or more kinds of isoparaffins may be used as the hydrocarbon solvent.

These water-immiscible organic solvents may be used alone or in combination of two or more thereof.

Among these, as the organic solvent mixed with the tertiary alcohol, a water-immiscible organic solvent can be suitably used from the viewpoint of excellent solubility of the component (a).

The ratio of the content of the water-immiscible organic solvent and the tertiary alcohol (water-immiscible organic solvent: tertiary alcohol) in the component (b) may be 98 to 20: 2 to 80, 97 to 40: 3 to 60, 97 to 60: 3 to 40, 97 to 80: 3 to 25, 96 to 90: 4 to 10 by mass ratio.

When the ratio of the content of the water-immiscible organic solvent and the tertiary alcohol is within the above range, the component (a) exhibits excellent solubility in the composition.

Among the water-immiscible organic solvents, at least one of an aromatic solvent and an aliphatic hydrocarbon solvent can be preferably used from the viewpoint of excellent solubility of the component (a). Among these, an aromatic solvent is more preferably used from the viewpoint of excellent solubility of the component (a).

Among the above-mentioned aromatic solvents, toluene, xylene, anisole, cumene, benzyl alcohol, and the like are preferably used.

Among the above-mentioned aliphatic hydrocarbon solvents, hexane, octane, isononane, isooctane, which are open-chain hydrocarbon solvents; cyclohexane, methylcyclohexane, methylcyclopentane, methoxycyclopentane, which are alicyclic hydrocarbon solvents, and the like are preferably used. Among these, an alicyclic hydrocarbon solvent is more preferably used from the viewpoint of excellent solubility of the component (a).

As the water-immiscible organic solvent other than the aromatic solvent or the aliphatic hydrocarbon solvent, for example, methyl isobutyl ketone, chloroform, trichloroethane, ethyl acetate, butyl butyrate, and the like are also preferably used.

A primary alcohol and a secondary alcohol may be contained in the composition, but the content of the primary alcohol and the secondary alcohol is preferably in a range of 0% by mass or more and 0.1% by mass or less in total, based on the total amount of the composition, and the composition is preferably substantially free of the primary alcohol and the secondary alcohol.

By setting the total content of the primary alcohol and the secondary alcohol within the above range, the viscosity of the conductive polymer composition can be suppressed from becoming excessively high, and a conductive polymer composition having an appropriate viscosity can be easily obtained. Therefore, it is possible to prevent the temperature required for heating and drying the coating film of the composition from becoming excessively high, and it is possible to prevent deterioration of the conductive polymer contained in the coating film due to heat, and to suppress residual alcohol components in the film and consequent deterioration of the conductivity of the coating film.

Further, by setting the total content of the primary alcohol and the secondary alcohol in the above range, when compared with the case where the total content of the primary alcohol and the secondary alcohol is larger than the above range, it is possible to have a higher polyaniline complex content concentration and have lower content of the solvent in the composition when the compositions exhibiting the same viscosity are compared with each other. Thus, even when heating conditions of the coating film of the composition are the same, the amount of residual solvent in the film can be reduced, and a film having excellent conductivity can be obtained.

In addition, by setting the total content of the primary alcohol and the secondary alcohol in the above range, an increase in viscosity when the conductive polymer composition is stored at room temperature can be suppressed, and a conductive polymer composition excellent in storage stability can be obtained.

Examples of the primary alcohol or secondary alcohol include methanol, ethanol, isopropyl alcohol, 1-propanol, 1-butanol, 2-butanol, 1-pentanol, 2-pentanol, benzyl alcohol, alkoxy alcohol (for example, 1-methoxy-2-propanol, 3-methoxy-1-butanol, 2-methoxyethanol, and 2-ethoxyethanol), and the like.

The ratio of the content of the component (b) to the total amount of the composition and the content of the component (a) to the total amount of the composition (content of component (a)/ content of component (b)) may be 0.0001 to 0.5, 0.01 to 0.3, 0.05 to 0.2, or 0.07 to 0.15 by mass ratio.

When (content of component (a)/ content of component (b)) is within the above range, the conductive polymer in the component (b) may exhibit a stable dissolved state.

### (Component (c): phenolic compound)

The composition according to one aspect of the present invention may contain a phenolic compound. By containing the phenolic compound, the solubility of the component (a) can be further increased, and the conductivity of the conductive film produced using the composition can be increased.

The phenolic compound is not particularly limited, and is a compound represented by ArOH (wherein Ar is an aryl group or a substituted aryl group). Specific examples thereof include phenol, substituted phenols such as o-, m-, or p-cresol, o-, m-, or p-ethylphenol, o-, m-, or p-propylphenol, o-, m-, or p-butylphenol, o-, m-, or p-chlorophenol, salicylic acid, hydroxybenzoic acid, and hydroxynaphthalene; polyvalent phenolic compounds such as catechol and resorcinol; polymeric compounds such as phenol resin, polyphenol, and poly(hydroxystyrene), and the like.

Further, a phenolic compound represented by the following formula (3) can be used.

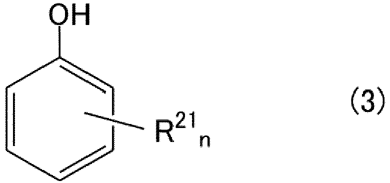

In the formula (3), n is an integer of 1 to 5.

R²¹'s are respectively an alkyl group including 2 to 10 carbon atoms, an alkenyl group including 2 to 20 carbon atoms, an alkylthio group including 1 to 20 carbon atoms, a cycloalkyl group including 3 to 10 carbon atoms, an aryl group including 6 to 20 carbon atoms, an alkylaryl group including 7 to 20 carbon atoms, or an arylalkyl group including 7 to 20 carbon atoms.

The above R²¹ will be described below.

Examples of the alkyl group include methyl, ethyl, propyl, isopropyl, butyl, isobutyl, tert-butyl, tert-amyl, and the like.

Examples of the alkenyl group include a substituent having an unsaturated bond in the molecule of the alkyl group described above.

Examples of the cycloalkyl group include cyclopentane, cyclohexane, and the like.

Examples of the alkylthio group include methylthio, ethylthio, and the like.

Examples of the aryl group include phenyl, naphthyl, and the like.

Examples of the alkylaryl group and arylalkyl group include a substituent obtained by combining the above-described alkyl group and aryl group.

Among these groups, R²¹ is preferably a methyl group or an ethyl group.

Further, a phenolic compound represented by the following formula (3') can be used.

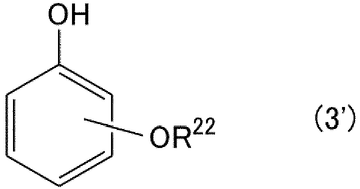

In the formula (3'), R²² is an alkyl group including 1 to 20 carbon atoms, an alkenyl group including 2 to 20 carbon atoms, a cycloalkyl group including 3 to 10 carbon atoms, an alkylthio group including 1 to 20 carbon atoms, an aryl group including 6 to 20 carbon atoms, an alkylaryl group including 7 to 20 carbon atoms, or an arylalkyl group including 7 to 20 carbon atoms.

Specific examples of R²² in the formula (3') is the same as that of R²¹ in the formula (3).

The content of the component (c) is preferably 10 to 5000 parts by mass, more preferably 10 to 2000 parts by mass, based on 100 parts by mass of the component (a).

### (Component (d): acidic substance and/or salt of acidic substance)

The composition according to one aspect of the present invention may contain one or more selected from the group consisting of an acidic substance and a salt of an acidic substance. The component is usually used as a heat-resistant stabilizer, and the heat resistance of the conductive film prepared by using the composition, for example, can be increased.

The acidic substance may be either an organic acid which is an acid of an organic compound or an inorganic acid which is an acid of an inorganic compound, and is preferably an organic acid. The acidic substance is preferably an organic acid having one or more sulfo groups.

The organic acid having a sulfo group is preferably a cyclic, open-chain, or branched alkyl sulfonic acid, a substituted or unsubstituted aromatic sulfonic acid, or a polysulfonic acid, having one or more sulfo groups.

Examples of the alkyl sulfonic acid include methanesulfonic acid, ethanesulfonic acid, and di(2-ethylhexyl)sulfosuccinic acid. Here, the alkyl group is preferably a linear or branched alkyl group including 1 to 18 carbon atoms.

Examples of the aromatic sulfonic acid include those including 6 to 20 carbon atoms, and examples thereof include sulfonic acids having a benzene ring, sulfonic acids having a naphthalene skeleton, and sulfonic acids having an anthracene skeleton. Examples of the aromatic sulfonic acid include a substituted or unsubstituted benzene sulfonic acid, a substituted or unsubstituted naphthalene sulfonic acid, and a substituted or unsubstituted anthracene sulfonic acid.

Examples of the substituent include a substituent selected from the group consisting of, for example, an alkyl group (e.g., those including 1 to 20 carbon atoms), an alkoxy group (e.g., those including 1 to 20 carbon atoms), a hydroxy group, a nitro group, a carboxy group, an acyl group, and the substituent may be substituted by one or more substituents.

Specific examples of the aromatic sulfonic acid include a compound represented by the following formula (4) or (5).

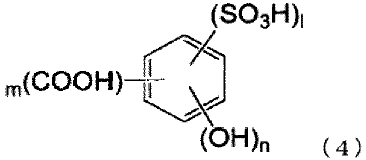

In the formula (4), I is 1 or more, m is an integer of 0 or more and 5 or less, n is an integer of 0 or more and 5 or less; and when one of m and n is 0, the other is 1 or more.

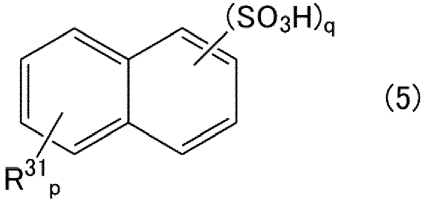

In the formula (5), q is 1 or more, p is an integer of 0 or more and 7 or less, and R³¹'s are independently an alkyl group including 1 to 20 carbon atoms, a carboxyl group, a hydroxyl group, a nitro group, a cyano group, or an amino group.

I is preferably 1 to 3. m is preferably 1 to 3. n is preferably 0 to 3.
q is preferably 1 to 3. p is preferably 0 to 3. R³¹ is preferably an alkyl group including 1 to 20 carbon atoms, a carboxy group, or a hydroxyl group.

Examples of the aromatic sulfonic acid include 4-sulfophthalic acid, 5-sulfoisophthalic acid, 5-sulfosalicylic acid, 1-naphthalenesulfonic acid, 2-naphthalenesulfonic acid, 2-hydroxy-6-naphthalenesulfonic acid, p-phenolsulfonic acid, toluenesulfonic acid, p-xylene-2-sulfonic acid, 4,4'-biphenyldisulfonic acid, dibenzofuran-2-sulfonic acid, flavianic acid, (+)-10-camphorsulfonic acid, monoisopropylnaphthalenesulfonic acid, 1-pyrenesulfonic acid, and the like. Among these, from the viewpoint of increasing heat resistance, 4-sulfophthalic acid, 5-sulfosalicylic acid, 5-sulfoisophthalic acid, 2-naphthalenesulfonic acid, dibenzofuran-2-sulfonic acid, flavianic acid, 2-hydroxy-6-naphthalenesulfonic acid, and 1-pyrenesulfonic acid are preferable.

Examples of the salt of an acidic substance include the salts of the compounds listed above. Examples of the counter ion of the salt include sodium, lithium, potassium, cesium, ammonium, calcium, barium, and the like.

The component (d) may be a hydrate.

The content of the component (d) is preferably 0.1 to 1000 parts by mass, more preferably 1 to 100 parts by mass, and still more preferably 1 to 30 parts by mass, based on 100 parts by mass of the component (a).

### (Component (e): acid having hydrophobic group)

The composition according to one aspect of the present invention may contain an acid having a hydrophobic group. The component is typically used as a permeability enhancer to allow the composition to penetrate into an object (e.g., a capacitor).

Examples of the hydrophobic group include a linear alkyl group, a branched alkyl group, an alkylphenyl group, an alkylnaphthyl group, and the like. The number of carbon atoms of the alkyl group included in the linear alkyl group, the branched alkyl group, the alkylphenyl group, and the alkylnaphthyl group is preferably 2 to 20.

Examples of the component (e) include an alkyl carboxylic acid, a phosphate monoester, a phosphate diester, an alkyl benzene carboxylic acid, an alkyl benzene phosphonic acid, and the like. The alkylbenzene carboxylic acid is a compound represented by Rr-Ph-COOH, and the alkylbenzene phosphonic acid is a compound represented by R_{f}-Ph-PO(OH)₂ (wherein R_{f} represents an alkyl group, and Ph represents a phenyl group).

The number of carbon atoms of the alkyl group included in the alkylcarboxylic acid, the alkylbenzenecarboxylic acid, and the alkylbenzenephosphonic acid is preferably 2 to 20. The phosphate monoester and phosphate diester are preferably an ester obtained from phosphoric acid and alcohol including 2 to 20 carbon atoms.

Specific examples of the component (e) include propionic acid, DL-2-methylvaleric acid, 2-methylvaleric acid, 2-ethylhexanoic acid, 3,5,5-trimethylhexanoic acid, myristic acid, monomethyl phosphate, dimethyl phosphate, a mixture of monomethyl phosphate and dimethyl phosphate, monoethyl phosphate, diethyl phosphate, a mixture of monoethyl phosphate and diethyl phosphate, monoisopropyl phosphate, diisopropyl phosphate, a mixture of monoisopropyl phosphate and diisopropyl phosphate, monobutyl phosphate, dibutyl phosphate, a mixture of monobutyl phosphate and dibutyl phosphate, mono(2-ethylhexyl)phosphate, di(2-ethylhexyl)phosphate, a mixture of mono(2-ethylhexyl)phosphate and di(2-ethylhexyl)phosphate, and the like.

The content of the component (e) is preferably 20 to 900 parts by mass, more preferably 100 to 500 parts by mass, based on 100 parts by mass of the component (a).

### (Component (f): other resin)

The composition according to one aspect of the present invention may further contain other resin, for example, as a binder base material, a plasticizer, and a matrix base material.

Specific examples of the other resin include polyolefins such as polyethylene and polypropylene; chlorinated polyolefin, polystyrene, polyester, polyamide, polyacetal, polyethylene terephthalate, polycarbonate, polyethylene glycol, polyethylene oxide, polyacrylic acid, polyacrylate ester, polymethacrylate ester, polyvinyl alcohol, and polyvinyl acetal.

Instead of the resin or together with the resin, a thermosetting resin such as an epoxy resin, a urethane resin, or a phenol resin, or a precursor capable of forming the thermosetting resin may be contained.

The content of the component (f) is preferably 1 to 1000 parts by mass, more preferably 10 to 500 parts by mass, based on 100 parts by mass of the component (a).

### (Component (g): silica)

The composition according to one aspect of the present invention may contain silica. By containing silica, a conductive film having excellent heat resistance can be formed.

The term "silica" means an oxide of silicon containing silicon (Si) and oxygen (O), and is not limited to compounds represented by SiOx such as SiO₂, but also includes oligomers or polymers having a siloxane bond (-O-Si-O-). The silica may also be hydrated or anhydrous.

The silica is preferably particulate and may have a bead-like structure of particles. The mean particle diameter of the silica particles is preferably 1 to 200 nm. Silica particles in a colloidal state (colloidal silica) may be used.

The mean particle diameter of the silica particles is obtained by calculating the specific surface area by BET method and converting the calculated specific surface area into the mean particle diameter. The specific surface area is calculated by BET method as described in JIS Z8830 (2013).

Examples of the commercially available silica include "ORGANOSILICASOL" series ("IPA-ST," "IPA-ST-ZL," "IPA-ST-UP," and the like) and the "SNOWTEX" series manufactured by Nissan Chemical Corporation.

The content of the component (g) is preferably 0.1 to 60 parts by mass, and may be 0.1 to 40 parts by mass, based on 100 parts by mass of the component (a).

The composition according to one aspect of the present invention may consist essentially of components (a) and (b), and optionally one or more components selected from the group consisting of (c) to (g). In this case, an unavoidable impurity may be contained.

For example, 70% or more by mass, 80% or more by mass, 90% or more by mass, 98% or more by mass, 99% or more by mass, 99.5% or more by mass, 99.9% or more by mass, or 100% by mass of the composition according to one aspect of the present invention may be composed of components (a) to (b),
components (a) to (c),
components (a) to (d),
components (a) to (e),
components (a) to (f), or
components (a) to (g).

The viscosity of the composition according to one embodiment of the present invention may be 0.01 to 10000 mPa·s, may be 0.05 to 1000 mPa·s, and may be 0.5 to 500 mPa·s.

In addition, the viscosity of the composition according to one embodiment of the present invention may be 100 mPa·s or lower, 70 mPa ·s or lower, 65 mPa·s or lower, 50 mPa·s or lower, 10 mPa·s or lower, or 7 mPa s or lower.

The viscosity of the conductive polymer composition is measured by the method described in Examples.

### [Conductive film]

A conductive film can be formed by applying the composition according to one aspect of the present invention on a substrate and drying the composition. The composition may be applied on a substrate such as glass, a resin film, a sheet, a nonwoven fabric, an inorganic porous material, or inorganic fine particles having a desired shape to form a conductive plating laminate.

The thickness of the conductive film is usually 1 mm or less, preferably 10 nm to 50 µm.

As a method of applying the composition, a known method such as a casting method, a spraying method, a dip coating method, a doctor blade method, a bar coat method, a spin coating method, an electrospinning method, a screen printing method, and a rotogravure method can be used.

Further, a step of immersing the above-described conductive film (coating film) in a solution containing a component (d2) selected from the components listed as the above-described component (d) (hereinafter also referred to as an immersion solution) and drying the film may be provided.

In the following explanation, among the components (d), the component (d) contained in the conductive polymer composition prior to film formation is referred to as "component (d1)," and the component (d) contained in the conductive film from the outside, for example, by a process such as immersing the conductive film formed using the conductive polymer composition in an immersion solution is referred to as "component (d2)." The component (d2) is preferably a sulfonic acid represented by the formula (4) or a salt thereof.

The solution in which the film is immersed may contain a solvent.

The solvent is not particularly limited as long as the components (d2) are dissolved, and examples thereof include water, an alcohol-based solvent, a ketone-based solvent, an ether-based solvent, an ester-based solvent, and the like. One solvent may be used alone or two or more solvents may be used in combination.

Specific examples of the solvent include methanol, ethanol, isopropanol, n-butanol, 1-methoxy-2-propanol, 3-methoxy-1-butanol, 3-methoxy-3-methylbutanol, 1-ethoxy-2-propanol, ethyl acetate, butyl acetate, MIBK, methyl ethyl ketone (MEK), ethylene glycol mono tert-butyl ether, propylene glycol monomethyl ether acetate, dipropylene glycol monomethyl ether, and the like.

The content of the component (d2) in the solution in which the film is immersed is preferably 10 to 1200 parts by mass, more preferably 30 to 700 parts by mass, and still more preferably 70 to 400 parts by mass, based on 1 part by mass of the composition obtained by removing the solvent.

If the content of the component (d2) is more than 1200 parts by mass, the acidic substance becomes excessive in the coating film, causing deterioration of the polyaniline main chain, and the conductivity may be lowered.

The content of the component (d2), in the solution in which the film is immersed, is preferably 0.1% by weight to 10% by weight, more preferably 0.3% by weight to 6% by weight, and still more preferably 0.7% by weight to 3.5% by weight.

Examples of the immersing method include dipping.

The immersing time is preferably 1 minute or more, and more preferably 3 minutes or more and 200 minutes or less. The immersing temperature is preferably 5 °C to 50 °C.

Drying after immersion is preferably performed by an oven, a hot plate, or the like.

The drying temperature is preferably 80 to 200 °C, more preferably 100 to 170 °C.

The drying time is preferably 1 to 180 minutes, and more preferably 3 to 60 minutes. If necessary, heating may be performed under reduced pressure. The drying temperature and the drying time are not particularly limited, and may be appropriately selected depending on the material used.

As described above, the component (d) may be added as the component (d1) in the composition described above, or may be contained as the component (d2) in the conductive film obtained from the composition. The component (d) may be added to the composition as the component (d1), and further contained in the conductive film obtained from the composition as the component (d2).

That is, the conductive film according to one aspect of the present invention may contain a component (d) added prior to film formation (hereinafter, sometimes referred to as a component (d1)) and a component (d) added after film formation (hereinafter, sometimes referred to as a component (d2)). The components (d1) and (d2) may be the same as or different from each other. When the components (d1) and (d2) are different from each other, for example, the component (d1) is a compound represented by the formula (5), and the component (d2) is a compound represented by the formula (4).

The conductive film according to one aspect of the present invention may contain (a) a conductive polymer, and may contain the above-described component (d) (one or more selected from the components (d1) and (d2)).

The above-described conductive film may consist essentially of a composition (a) and an arbitrary component (d). In this case, an unavoidable impurity may be contained.

For example, 70% by mass or more, 80% by mass or more, 90% by mass or more, 98% by mass or more, 99% by mass or more, 99.5% by mass or more, 99.9% by mass or more, or 100% by mass of the conductive film may be composed of
a component (a), or
components (a) and (d).

The conductivity of the conductive film is preferably 0.05 S/cm or higher, more preferably 25 S/cm or higher, more preferably 50 S/cm or higher, and still more preferably 80 S/cm or higher.

The conductivity of the conductive film is measured by the method described in Examples.

Each component of the conductive film described above is as described in the composition according to one aspect of the present invention.

The components (a) to (g) are different from each other.

### [Capacitor]

A capacitor can be produced using the composition according to one aspect of the present invention. Specific examples of the capacitor include an electrolytic capacitor, an electric double layer capacitor, and the like, and examples of the electrolytic capacitor include a solid electrolytic capacitor.

When the solid electrolytic capacitor is produced, for example, a step of impregnating an anode body containing an anode and a dielectric body of the solid electrolytic capacitor with the composition of the present invention, and drying the impregnated anode body to form a conductive film on the anode body. That is, the solid electrolytic capacitor contains the conductive film of the present invention.

The capacitor according to one aspect of the present invention is useful, for example, in an invehicle application, a circuit board in a communication base station, or the like.

### [Conductive plating laminate, conductive article]

A conductive plating laminate having a conductive film can be produced by applying a composition according to one aspect of the present invention to a substrate such as glass, a resin film, a sheet, a nonwoven fabric, an inorganic porous material, and inorganic fine particles having a desired shape, and removing a solvent. A conductive article can be produced by processing the conductive plating laminate into a desired shape by a known method such as vacuum forming or pressure forming. From the viewpoint of forming, the substrate is preferably a resin film, a sheet, or a nonwoven fabric.

As a method of applying the composition to the substrate, a known method such as a casting method, a spraying method, a dip coating method, a doctor blade method, a bar coat method, a spin coating method, an electrospinning method, a screen printing method, and a rotogravure method can be used. When the coating film is dried, the coating film may be heated depending on the type of the solvent. For example, heating is performed at the temperature of 250 °C or less, preferably 50 °C or more and 200 °C or less under an air flow, and further heating is performed under reduced pressure as necessary. The heating temperature and the heating time are not particularly limited, and may be appropriately selected depending on the material used.

The composition according to one aspect of the present invention can also be molded into a conductive formed body. Examples of such a conductive formed body include a self-supporting conductive formed body having no substrate.

### Examples

### Production Example 1 (Production of polyaniline complex)

32.4 g of "NEOCOL SWC" (sodium di-2-ethylhexyl sulfosuccinate, manufactured by DKS Co. Ltd.), 13.3 g of aniline, and 0.9 g of "Sorbon T-20" (non-ionic emulsifier having polyoxyethylene sorbitan fatty acid ester structure, manufactured by Toho Chemical Industry Co., Ltd.) were placed in a 1,000 ml separable flask, and dissolved in 320.4 g of toluene.

450 g of 8.5% by mass phosphoric acid aqueous solution was added thereto, the reaction solution having two liquid phases of toluene and water was stirred, and the internal temperature of the reaction solution was cooled to 5 °C. When the internal temperature of the reaction solution reached 5 °C, a solution in which 39.3 g of APS (ammonium persulfate) was dissolved in 90.2 g of 8.5% by mass phosphoric acid aqueous solution was added dropwise using a dropping funnel while stirring the reaction solution, after the addition was completed, the reaction solution was further stirred for 8 hours while keeping the internal temperature of the solution at 5 °C. After the stirring was stopped, the contents were transferred to a separatory funnel, and the aqueous phase and the toluene phase were separated by standing. After separating, the toluene phase was washed once with 180.3 g of 8.5% by mass phosphoric acid aqueous solution and five times with 328.0 g of ion-exchanged water to obtain a polyaniline complex toluene solution.

The solution was filtered through a No.2 filter paper to remove insoluble matter, and a toluene solution of the polyaniline complex soluble in toluene was collected.

The solution was transferred to an evaporator, the volatiles were distilled off under reduced pressure while being warmed in a hot water bath at 60 °C to obtain a polyaniline complex (1) (protonated polyaniline).

The doping ratio of the proton donor (sodium di-2-ethylhexylsulfosuccinate) to polyaniline in the polyaniline complex (1) was 0.36.

### Example 1

### [Production of conductive polymer composition]

Toluene (manufactured by FUJIFILM Wako Pure Chemical Corporation) and tert-amyl alcohol (manufactured by Tokyo Chemical Industry Co., Ltd.) were mixed at a ratio of 95:5 (mass ratio), and the mixture was stirred and mixed until uniform to prepare a component (b) as a mixed solvent.

94 g of this mixed solvent was placed in a container, and 6 g of the polyaniline complex (1) obtained in Production Example 1 was added and dissolved to obtain a conductive polymer composition.

### Examples 2 to 7 and Comparative Examples 1 to 11

A conductive polymer composition was obtained in the same manner as in Example 1, except that the type and mixing ratio of the solvent of the component (b) were changed as shown in Table 1.

In Table 1, the symbols in the column of the solvent composition indicate the following.
TAA: tert-amyl alcohol (manufactured by Tokyo Chemical Industry Co., Ltd.)
Tol: Toluene (manufactured by FUJIFILM Wako Pure Chemical Corporation)
Xy: Xylene (manufactured by FUJIFILM Wako Pure Chemical Corporation)
Ani: Anisol (manufactured by Tokyo Chemical Industry Co., Ltd.)
MCP: Methoxycyclopentane (manufactured by FUJIFILM Wako Pure Chemical Corporation)

### [Solubility evaluation]

The dissolution state (presence or absence of precipitation formation and presence or absence of powder adhering to the wall surface of the container) of the polyaniline complex in the conductive polymer composition was visually confirmed, and evaluated by the following evaluation criteria. Evaluation results are shown in Table 1.
A: The polyaniline complex was dissolved, and neither the precipitation formation nor the powder adhering to the wall surface of the container was visually confirmed.
B: Although the polyaniline complex was almost dissolved, the powder adhering to the wall surface of the container was visually confirmed.
C: A portion of the polyaniline complex was not dissolved, and the precipitation formation was confirmed.

**Table 1**

| | Component (a) | Component (b) | | | | Solubility |
|---|---|---|---|---|---|---|
| | Polyaniline complex content [% by mass] | Content ratio of the tertiary alcohol in the entire component (b) [% by mass] | Solvent composition | | | |
| | | | water-immiscible organic solvent [Mass ratios are shown in parentheses] | tertiary alcohol | water-immiscible organic solvent: tertiary alcohol [mass ratio] | |
| Example 1 | 6 | 5 | Tol | TAA | 95:5 | A |
| Example 2 | 6 | 3 | Tol | TAA | 97:3 | B |
| Example 3 | 6 | 5 | Xy | TAA | 95:5 | A |
| Example 4 | 6 | 3 | Xy | TAA | 97:3 | B |
| Example 5 | 6 | 5 | Ani | TAA | 95:5 | A |
| Example 6 | 6 | 3 | Ani | TAA | 97:3 | A |
| Example 7 | 6 | 5 | MCP | TAA | 95:5 | B |
| Comp. Ex 1 | 6 | 0 | Tol | - | 100:0 | C |
| Comp. Ex 2 | 6 | 1 | Tol | TAA | 99:1 | C |
| Comp. Ex 3 | 6 | 0 | Xy | - | 100:0 | C |
| Comp. Ex 4 | 6 | 1 | Xy | TAA | 99:1 | C |
| Comp. Ex 5 | 6 | 0 | Ani | - | 100:0 | C |
| Comp. Ex 6 | 6 | 1 | Ani | TAA | 99:1 | C |
| Comp. Ex 7 | 6 | 0 | Xy,Ani (Xy:Ani=90:10) | - | 100:0 | C |
| Comp. Ex 8 | 6 | 0 | Xy,Ani (Xy:Ani=50:50) | - | 100:0 | C |
| Comp. Ex 9 | 6 | 0 | Xy,Ani (Xy:Ani=10:90) | - | 100:0 | C |
| Comp. Ex. 10 | 6 | 0 | MCP | - | 100:0 | C |
| Comp. Ex. 11 | 6 | 1 | MCP | TAA | 99:1 | C |

### Example 8

### [Production of conductive polymer composition]

Xylene (manufactured by FUJIFILM Wako Pure Chemical Corporation) and tert-butanol (also known as 2-methyl-2-propanol, manufactured by Tokyo Chemical Industry Co., Ltd.) were mixed at a ratio of 97:3 (mass ratio), and the mixture was stirred and mixed until uniform to prepare a component (b) as a mixed solvent.

88 g of this mixed solvent was placed in a container, and 12 g of the polyaniline complex (1) obtained in Production Example 1 was added and dissolved to obtain a conductive polymer composition.

### Comparative Example 12

A conductive polymer was obtained in the same manner as in Example 8, except that tert-butanol was changed to 2-butanol (manufactured by Tokyo Chemical Industry Co., Ltd.).

### Comparative Example 13

A conductive polymer was obtained in the same manner as in Example 8, except that tert-butanol was changed to 1-butanol (manufactured by Tokyo Chemical Industry Co., Ltd.).

### Example 9

Xylene (manufactured by FUJIFILM Wako Pure Chemical Corporation) and tert-amyl alcohol (manufactured by Tokyo Chemical Industry Co., Ltd.) were mixed at a ratio of 95:5 (mass ratio), and the mixture was stirred and mixed until uniform to prepare a component (b) as a mixed solvent.

88 g of this mixed solvent was placed in a container, and 12 g of the polyaniline complex (1) obtained in Production Example 1 was added and dissolved to obtain a conductive polymer composition.

### Comparative Example 14

A conductive polymer was obtained in the same manner as in Example 9, except that tert-amyl alcohol was changed to 1-pentanol (manufactured by Tokyo Chemical Industry Co., Ltd.).

### Example 10

Xylene (manufactured by FUJIFILM Wako Pure Chemical Corporation) and tert-butanol (also known as 2-methyl-2-propanol, manufactured by Tokyo Chemical Industry Co., Ltd.) were mixed at a ratio of 97:3 (mass ratio), and the mixture was stirred and mixed until uniform to prepare a component (b) as a mixed solvent.

95 g of this mixed solvent was placed in a container, and 5 g of the polyaniline complex (1) obtained in Production Example 1 was added and dissolved to obtain a conductive polymer composition.

### Comparative Example 15

A conductive polymer was obtained in the same manner as in Example 10, except that tert-butanol was changed to 2-butanol (manufactured by Tokyo Chemical Industry Co., Ltd.).

### Comparative Example 16

A conductive polymer was obtained in the same manner as in Example 10, except that tert-butanol was changed to 1-butanol (manufactured by Tokyo Chemical Industry Co., Ltd.).

Conductive polymer compositions obtained in Examples 8 to 10 and Comparative Examples 12 to 16 were measured for viscosity at a liquid temperature of 23 to 24 °C using a tuning-fork vibrating viscometer SV-1H (manufactured by A&D Company, Limited). The results are shown in Table 2.

**Table 2**

| | Component (a) | Component (b) | | | | | | Viscosity [mPa·s] |
|---|---|---|---|---|---|---|---|---|
| | Polyaniline complex content [% by mass] | Content ratio in the entire component (b) [% by mass] | | Solvent composition | | | | |
| | | alcohol | tertiary alcohol | water-immiscible organic solvent | alcohol | | water-immiscible organic solvent: alcohol [mass ratio] | |
| | | | | | type | name | | |
| Example 8 | 12 | 3 | 3 | Xy | tertiary | tBu | 97:3 | 6.6 |
| Comp. Ex. 12 | 12 | 3 | 0 | Xy | secondary | 2Bu | 97:3 | 172 |
| Comp. Ex. 13 | 12 | 3 | 0 | Xy | primary | 1Bu | 97:3 | 26.8 |
| Example 9 | 12 | 5 | 5 | Xy | tertiary | TAA | 95:5 | 4.0 |
| Comp. Ex. 14 | 12 | 5 | 0 | Xy | primary | 1PO | 95:5 | 4.4 |
| Example 10 | 5 | 3 | 3 | Xy | tertiary | tBu | 97:3 | 1.0 |
| Comp. Ex. 15 | 5 | 3 | 0 | Xy | secondary | 2Bu | 97:3 | 1.2 |
| Comp. Ex. 16 | 5 | 3 | 0 | Xy | primary | 1Bu | 97:3 | 1.3 |

In Table 2 and Tables 3 and 5 to be described later, the symbols in the column of the solvent composition indicate the following.
Xy: Xylene (manufactured by FUJIFILM Wako Pure Chemical Corporation)
tBu: tert-butanol (manufactured by Tokyo Chemical Industry Co., Ltd.)
2Bu: 2-butanol (manufactured by Tokyo Chemical Industry Co., Ltd.)
1Bu: 1-butanol (manufactured by Tokyo Chemical Industry Co., Ltd.)
TAA: tert-amyl alcohol (manufactured by Tokyo Chemical Industry Co., Ltd.)
1PO: 1-pentanol (manufactured by Tokyo Chemical Industry Co., Ltd.)

### Example 11

### [Production of conductive polyaniline thin film]

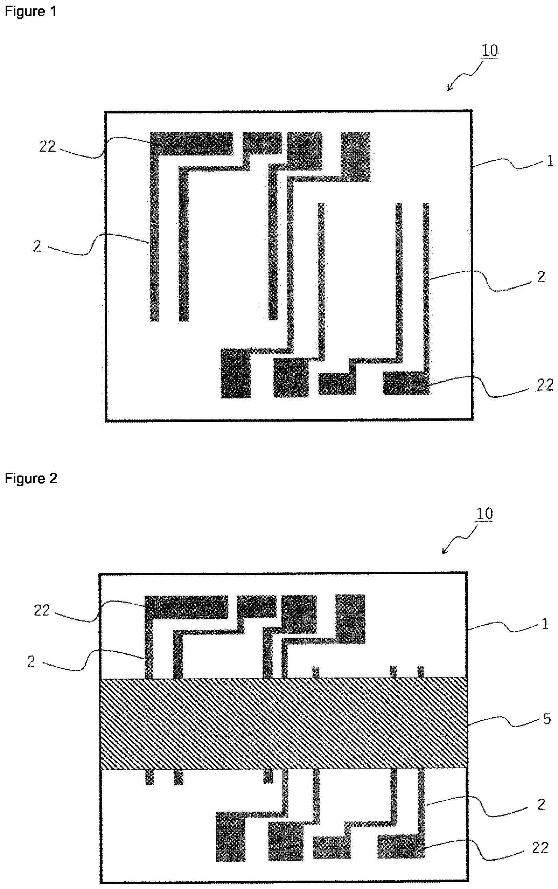

On the top surface of a glass substrate 1 shown in Figure 1, on which indium tin oxide electrodes 2 (hereafter referred to as ITO electrode 2) were formed on the surface by patterning, approximately 1 ml of the conductive polymer composition obtained in Example 10 was applied by the spin coating method. The application by the spin coating method was performed under 2000 rpm of the rotational velocity of the glass substrate 1 under air-atmosphere. The rotation time of the glass substrate 1 after dropping the conductive polymer composition onto the glass substrate 1 was 15 seconds. Next, the glass substrate 1 was dried on a hot plate at 120 °C for 60 minutes to form a conductive polyaniline thin film, thereby obtaining a glass substrate 10 with a conductive polyaniline thin film.

### [Electrical conductivity measurement of conductive polyaniline thin film]

With respect to the obtained glass substrate 10 with a conductive polyaniline thin film, a part of the conductive polyaniline thin film 5 on the glass substrate 1 covering the terminal 22 of ITO electrode 2 was scraped off, and as shown in Figure 2, the terminal 22 of ITO electrode 2 was exposed. The resistance and conductivity of the conductive polyaniline thin film were measured using Loresta-GP (manufactured by Mitsubishi Chemical Corporation; a resistivity meter by the four-terminal method) using the terminal 22 of ITO electrode 2 exposed on the surface.

### Comparative Example 17

A conductive polyaniline thin film was formed on the glass substrate 1 in the same manner as in Example 11 except that the conductive polymer composition obtained in Comparative Example 15 was used, and the conductivity of the conductive polyaniline thin film was measured in the same manner as in Example 11.

### Comparative Example 18

A conductive polyaniline thin film was formed on the glass substrate 1 in the same manner as in Example 11 except that the conductive polymer composition obtained in Comparative Example 16 was used, and the conductivity of the conductive polyaniline thin film was measured in the same manner as in Example 11.

Table 3 shows the measured values of the conductivity of each conductive polyaniline thin film measured in Example 11 and Comparative Examples 17 to 18.

**Table 3**

| | Coductive polymer composition | Component (a) | Component (b) | | | | | | Conductivity [S/cm] |
|---|---|---|---|---|---|---|---|---|---|
| | | Polyaniline complex content [% by mass] | Content ratio in the entire component (b) [% by mass] | | Solvent composition | | | | |
| | | | alcohol | tertiary alcohol | water-immiscible organic solvent | alcohol | | water-immiscible organic solvent: alcohol [mass ratio] | |
| | | | | | | type | name | | |
| Example 11 | Example 10 | 5 | 3 | 3 | Xy | tertiary | tBu | 97:3 | 0.064 |
| Comp. Ex. 17 | Comp. Ex. 15 | 5 | 3 | 0 | Xy | secondary | 2Bu | 97:3 | 0.057 |
| Comp. Ex. 18 | Comp. Ex. 16 | 5 | 3 | 0 | Xy | primary | 1Bu | 97:3 | 0.046 |

### Production Example 2 (Production of polyaniline complex)

A polyaniline complex (2) was obtained in the same manner as in Production Example 1, except that the internal temperature of the reaction solution after the addition of the phosphoric acid aqueous solution to the toluene solution of aniline, and the internal temperature of the solution after the completion of the dropwise addition of the APS (ammonium persulfate) aqueous solution were both changed from 5 °C to -5 °C, and the phosphoric acid aqueous solution added to the toluene solution of aniline and the phosphoric acid aqueous solution for dissolving APS (ammonium persulfate) were both changed from 8.5% by mass phosphoric acid aqueous solution to 17% by mass phosphoric acid aqueous solution.

The doping ratio of the proton donor (sodium di-2-ethylhexylsulfosuccinate) to polyaniline in the polyaniline complex (2) was 0.36.

### Example 12

38 g of hexane (manufactured by FUJIFILM Wako Pure Chemical Corporation) and 30 g of tert-amyl alcohol (manufactured by Tokyo Chemical Industry Co., Ltd.) were mixed (hexane: tert-amyl alcohol = 56: 44 (mass ratio)), and the mixture was stirred and mixed until uniform to prepare a component (b) as a mixed solvent.

32 g of p-tert-amylphenol (manufactured by FUJIFILM Wako Pure Chemical Corporation, component (c)) was mixed with this mixed solvent, and stirred until uniform to obtain a mixed liquid.

94.4 g of this mixed liquid was placed in a container, and 5.6 g of the polyaniline complex (2) obtained in Production Example 2 was added and dissolved to obtain a composition.

To the obtained composition, 0.42 g of 2-naphthalenesulfonic acid hydrate (manufactured by Tokyo Chemical Industry Co., Ltd., component (d)) was added, and the mixture was stirred at 30 °C for 30 minutes to obtain a conductive polymer composition.

Application by spin coating was performed in the same manner as in Example 11, except that the obtained conductive polymer composition was used. Then, a conductive polyaniline thin film was formed on the glass substrate 1 to obtain a glass substrate with a conductive polyaniline thin film in the same manner as in Example 11, except that the glass substrate 1 was dried on a hot plate at 40 °C for 30 minutes, and then dried on a hot plate at 150 °C for 30 minutes.

The obtained glass substrate with a conductive polyaniline thin film was subjected to conductivity measurement of the conductive polyaniline thin film in the same manner as in Example 11.

### Example 13

### [Sulfonic acid immersion treatment]

0.2 g of 50% by mass aqueous solution of 4-sulfophthalic acid (manufactured by Tokyo Chemical Industry Co., Ltd.) was dissolved in 9.8 g of isopropanol (manufactured by Wako Pure Chemical Industries, Ltd.) to obtain a uniform 1% by mass solution of 4-sulfophthalic acid.

The conductive polyaniline thin film of the glass substrate with the conductive polyaniline thin film obtained in Example 12 was immersed in 10 g of 1% by mass solution of 4-sulfophthalic acid at room temperature for 5 minutes. The glass substrate with the conductive polyaniline thin film after immersion was dried on a hot plate at 40 °C for 2 minutes, and then dried on a hot plate at 150 °C for 60 minutes to obtain a glass substrate with the conductive polyaniline thin film subjected to sulfonic acid immersion treatment.

The obtained glass substrate with a conductive polyaniline thin film was subjected to conductivity measurement of the conductive polyaniline thin film in the same manner as in Example 11.

### Comparative Example 19

A conductive polyaniline thin film was formed on the glass substrate 1 in the same manner as in Example 12 except that tert-amyl alcohol was changed to 1-pentanol (manufactured by Tokyo Chemical Industry Co., Ltd.). The obtained glass substrate with a conductive polyaniline thin film was subjected to conductivity measurement of the conductive polyaniline thin film in the same manner as in Example 11.

### Comparative Example 20

The conductive polyaniline thin film obtained in Comparative Example 19 was subjected to sulfonic acid immersion treatment in the same manner as in Example 13. The obtained glass substrate with a conductive polyaniline thin film was subjected to conductivity measurement of the conductive polyaniline thin film in the same manner as in Example 11.

Table 4 shows the measured conductivity values of the conductive polyaniline thin films obtained in Examples 12 to 13 and Comparative Examples 19 to 20.

**Table 4**

| | Component (a) | Component (b) | | | | | | Component (c) | Component (d) | | Conductivity [S/cm] |
|---|---|---|---|---|---|---|---|---|---|---|---|
| | Polyaniline complex content [% by mass] | Content ratio in the entire component (b) [% by mass] | | Solvent composition | | | | phenolic compound | Component (d1) | Component (d2) | |
| | | | | | | | | | acidic substance (conductive polymer composition) | acidic substance (immersion solution) | |
| | | alcohol | tertiary alcohol | water-immiscible organic solvent | alcohol | | water-immiscible organic solvent: alcohol [mass ratio] | | | | |
| | | | | | type | name | | | | | |
| Example 12 | 5.6 | 44 | 44 | Hex | tertiary | TAA | 56:44 | tAP | NSA | - | 99 |
| Example 13 | 5.6 | 44 | 44 | Hex | tertiary | TAA | 56:44 | tAP | NSA | 4-SuPA | 248 |
| Comp. Ex. 19 | 5.6 | 44 | 0 | Hex | primary | 1PO | 56:44 | tAP | NSA | - | 78 |
| Comp. Ex. 20 | 5.6 | 44 | 0 | Hex | primary | 1PO | 56:44 | tAP | NSA | 4-SuPA | 164 |

In Table 4, the symbols in the column of the solvent composition indicate the following.
Hex: Hexane (manufactured by FUJIFILM Wako Pure Chemical Corporation)
TAA: tert-amyl alcohol (manufactured by Tokyo Chemical Industry Co., Ltd.)
1PO: 1-pentanol (manufactured by Tokyo Chemical Industry Co., Ltd.)
tAP: p-tert-amylphenol (manufactured by FUJIFILM Wako Pure Chemical Corporation)
NSA: 2-naphthalenesulfonate hydrate (manufactured by Tokyo Chemical Industry Co., Ltd.)
4-SuPA: 4-sulfophthalic acid aqueous solution (manufactured by Tokyo Chemical Industry Co., Ltd.)

In Table 4, the "total amount of the composition" in calculating the "polyaniline complex content" does not include the amount of the components (d2).

### Example 14

The conductive polymer composition obtained in Example 8 was stored at room temperature for 15 days, and then the viscosity was measured in the same manner as in Example 8. The results are shown in Table 5.

### Comparative Example 21

The conductive polymer composition obtained in Comparative Example 13 was stored at room temperature for 15 days, and then the viscosity was measured in the same manner as in Example 8. The results are shown in Table 5.

**Table 5**

| | Coductive polymer composition | Component (a) | Component (b) | | | | | | Viscosity [mPa·s] | |
|---|---|---|---|---|---|---|---|---|---|---|
| | | Polyaniline complex content [% by mass] | Content ratio in the entire component (b) [% by mass] | | Solvent composition | | | | | |
| | | | alcohol | tertiary alcohol | water-immiscible organic solvent | alcohol | | water- immiscible organic solvent: alcohol [mass ratio] | | |
| | | | | | | type | name | | before storage | after storage at room temperature |
| Example 14 | Example 8 | 12 | 3 | 3 | Xy | tertiary | tBu | 97:3 | 6.6 | 5.6 |
| Comp. Ex. 21 | Comp. Ex. 13 | 12 | 3 | 0 | Xy | primary | 1Bu | 97:3 | 26.8 | 38.6 |

### Industrial Applicability

The composition of the present invention can be used in the field of power electronics and optoelectronics, for electrostatic and antistatic materials, transparent electrodes and conductive film materials, materials of electroluminescence devices, circuit materials, electromagnetic wave shielding materials, electrolytes of capacitors, electrode materials of photovoltaic cells and secondary cells, fuel cell separator materials, or the like, or for plating undercoats, rust inhibitors, and the like.

Although only some exemplary embodiments and/or examples of this invention have been described in detail above, those skilled in the art will readily appreciate that many modifications are possible in the exemplary embodiments and/or examples without materially departing from the novel teachings and advantages of this invention. Accordingly, all such modifications are intended to be included within the scope of this invention.

The documents described in the specification and the specification of Japanese application(s) on the basis of which the present application claims Paris convention priority are incorporated herein by reference in its entirety.

## Claims

1. A conductive polymer composition comprising
(a) conductive polymer and
(b) a solvent,
wherein the component (b) comprises a tertiary alcohol, and the content ratio of the tertiary alcohol in the entire component (b) is more than 1% by mass and 70% by mass or less.

2. The conductive polymer composition according to claim 1, wherein the component (b) comprises a water-immiscible organic solvent.

3. The conductive polymer composition according to claim 2, wherein the ratio of the content of the water-immiscible organic solvent and the tertiary alcohol is 98 to 20: 2 to 80 by mass ratio.

4. The conductive polymer composition according to any one of claims 1 to 3, wherein the ratio of the content of the component (a) to the content of the component (b) (the content of the component (a)/the content of the component (b)) is 0.0001 to 0.5 by mass ratio.

5. The conductive polymer composition according to any one of claims 1 to 4, wherein the content of the component (a) is 0.01 to 30% by mass.

6. The conductive polymer composition according to any one of claims 1 to 5, wherein the tertiary alcohol is at least one selected from the group consisting of tert-amyl alcohol, 2-methyl-2-propanol, 3-methyl-3-pentanol, 2-methyl-2-pentanol, 2-methyl-2-hexanol, 2-methyl-2-heptanol, 3-methyl-3-octanol, diacetone alcohol, terpineol, and benzylic acid.

7. The conductive polymer composition according to any one of claims 2 to 6, wherein the water-immiscible organic solvent is at least one of an aromatic solvent and an aliphatic hydrocarbon solvent.

8. The conductive polymer composition according to claim 7, wherein the aromatic solvent is at least one selected from the group consisting of toluene, xylene, anisole, cumene, and benzyl alcohol.

9. The conductive polymer composition according to claim 7, wherein the aliphatic hydrocarbon solvent is at least one selected from the group consisting of hexane, octane, isononane, isooctane, cyclohexane, methylcyclohexane, and methylcyclopentane.

10. The conductive polymer composition according to any one of claims 1 to 9, wherein the total content of a primary alcohol and a secondary alcohol is 0.1% by mass or less.

11. The conductive polymer composition according to any one of claims 1 to 10, wherein the component (a) comprises one or more selected from the group consisting of polyaniline, a polyaniline derivative, polythiophene, a polythiophene derivative, polypyrrole and a polypyrrole derivative.

12. The conductive polymer composition according to any one of claims 1 to 11, wherein the component (a) is a polyaniline complex comprising polyaniline and a proton donor, and the polyaniline is doped with the proton donor.

13. The conductive polymer composition according to claim 12, wherein the proton donor is a sulfonic acid or a sulfonate.

14. The conductive polymer composition according to claim 13, wherein the sulfonic acid or sulfonate is a sulfosuccinic acid derivative represented by the following formula (III):
M(O₃SCH(CH₂COOR¹²)COOR¹³)ₘ ··· (III)
wherein in the formula (III),
M is a hydrogen atom, an organic free radical, or an inorganic free radical;
m is the valence of M;
R¹² and R¹³ are independently a hydrocarbon group or a group represented by -(R¹⁴O)ᵣ-R¹⁵,
wherein R¹⁴ is a hydrocarbon group or a silylene group, R¹⁵ is a hydrogen atom, a hydrocarbon group, or a group represented by R¹⁶₃Si-, wherein R¹⁶ is a hydrocarbon group, wherein the three R¹⁶'s may be the same as or different from each other, and r is an integer of 1 or more.

15. A conductive formed body obtained by forming the conductive polymer composition according to any one of claims 1 to 14.
